# EUROPÄISCHE PATENTANMELDUNG

(11) **EP 4 186 801 A1**
(43) Veröffentlichungstag der Anmeldung: **31.05.2023**
(21) Anmeldenummer: 21211203.1
(22) Anmeldetag: 30.11.2021
(51) Int. Cl.: B64F 1/36

(54) **VERFAHREN UND SYSTEM ZUM AUFFINDEN UND MANIPULIEREN EINES AN EINEM STÜCKGUT BEFESTIGTEN IDENTIFIKATORS**

(71) Anmelder: Siemens Aktiengesellschaft, 80333 München (DE)
(72) Erfinder: KLOSSEK, Andreas, 90547 Stein-Deutenbach (DE); MUECK, Dr. Bengt, 90429 Nürnberg (DE)
(74) Vertreter: Siemens Patent Attorneys

(57) **Zusammenfassung**

Das automatisierte Auslesen von Gepäckanhängern in Flughafen-Gepäckförderanlagen scheitert häufig an nichtauffindbaren und/oder nichtauslesbaren da verknittert/verknickt/partiell verdeckten Gepäckanhängern anhand derer den Gepäckstücken (6) eine Sortierinformation zuordenbar ist. Das Ausschleusen und manuelle Behandeln nicht auslesbarer Gepäckstücke (6) an manuellen Kodierstation (18) erfordert Ausschleusförderstrecken (14') und sichere Zugangswege und Arbeitsplätze. Um den Anteil nicht auslesbarer Gepäckstücke (6) zu erhöhen werden ein Verfahren und ein System zum Auffinden und Manipulieren eines an einem Gepäckstück befestigten Gepäckanhängers oder einem allgemeinen Stückgut (6) befestigten Identifikators, welche dem Stückgut (6) eine Sortierinformation zuordnet, offenbart. Bei einem nicht erfolgreichen Auffinden des Identifikators durch eine Lesevorrichtung (10) erfolgt mechanisches Manipulieren des Stückguts (6) mit einer Manipulationsvorrichtung (4). Bei einem erfolgreichen Auffinden des Identifikators und einem nicht erfolgreichen Auslesen des Identifikators erfolgt mechanisches Manipulieren des Identifikators mit der Manipulationsvorrichtung (4). Anschließend wird das Stückgut (6) gemäß seiner Sortierinformation behandelt.

## Beschreibung

Die vorliegende Erfindung betrifft das technische Gebiet der Systeme zum Auslesen eines an einem Stückgut befestigten Identifikators mit einer maschinenlesbaren Identität, insbesondere eines an einem Gepäckstück befestigten Gepäckanhängers, wobei diese Systeme häufig in Förder- und Sortiersystemen wie Flughafen-Gepäckförderanlagen herangezogen werden.

Flug-Gepäckstücke werden mit Gepäckförderanlagen automatisiert verarbeitet. Zur Identifizierung werden die Gepäckstücke mit Gepäckanhängern (Baggage-Tag, Identifikator) markiert, die aus einem weitgehend zweidimensionalen flexiblen Streifen Material bestehen, der mit Informationen bedruckt und meistens um einen Griff am Gepäckstück gewickelt und an den Enden zusammengeklebt wird. Zusätzlich werden meist kleine Aufkleber mit Identifikationsmerkmalen am Gepäckstück angebracht. Zum Auslesen des Gepäckanhängers werden Leseeinrichtungen herangezogen. Eine Lesung dieses Anhängers kann aus verschiedenen Gründen schief gehen. Wenn sich mehrere valide Anhänger/Aufkleber auf einem Gepäckstück befinden können die richtigen Informationen nicht bestimmt werden. Wenn in der Anlage zwei Gepäckstücke so nah aufeinander folgen, dass sie von der Anlage und damit auch von der Leseeinrichtung als ein Gepäckstück identifiziert werden, erkennt der Leser zwei Anhänger. Da der Anhänger flexibel ist, kann sich dieser während des Transportes verknüllen oder sich um Teile des Griffes wickeln. Einzelne in einer Hilfswanne beförderte Gepäckstücke (z.B. Rucksäcke) können auf dem Anhänger aufliegen, so dass dieser nicht gelesen werden kann. Dies kann auch bei ohne Hilfswannen beförderten Gepäckstücken passen. Ein Gepäckstück trennt sich von seiner Hilfswanne, die daraufhin von der Anlage als Gepäckstück wahrgenommen wird. Der Anhänger kann verloren gehen oder unleserlich sein. Wenn eine Auslesung Leser angefordert wird, kann keinen Anhänger gefunden werden.

Immer wenn an einer Leseeinrichtung ein Gepäckstück nicht gelesen werden kann, wird es von der Anlage zu einem manuellen Arbeitsplatz (Kodierstation) gefahren um ein erfolgreiches Auslesen zu ermöglich. Hierfür sind in den Anlagen zusätzlich zur Kodierstation Ausschleusungen, Wartepositionen, Bearbeitungsstationen und Einschleusungen vorgesehen. Wenn zwei Gepäckstücke vorliegen, werden diese getrennt und nacheinander manuell gescannt und in den weiteren Prozess gemäß der Sortierinformation des Gepäckstücks geschickt. Ist der Anhänger verknüllt und/oder verdeckt, wir dieser manuell bzw. hervorgeholt entfaltet, dann gescannt und das Gepäckstück anschließend wieder eingeschleust. Sind mehrere auslesbare Anhänger vorhanden (insb. kleinere Sticker) entscheidet sich die Person manuell für den gültigen. Ist kein Anhänger oder nur ein nicht lesbarer Anhänger vorhanden, muss das Gepäckstück aus der Anlage gefahren werden. Ungültige oder schlecht lesbare Aufkleber/Anhänger können an der Kodierstation entfernt werden und es werden neue Anhänger gedruckt und angebracht. Während die erfolgreiche Ausleserate bei direkt vom Check-In kommenden Gepäck sehr hoch ist, ist sie bei Transfer-Gepäckstücken sehr viel niedriger.

Manuelle Kodierstationen müssen während des Betriebs der Anlage, auch bei niedriger Last, jederzeit besetzt sein mit entsprechenden Humanaufwänden. Durch geschickte Positionierungen der Kodierplätze kann in Niedriglasten eine Person zwei Stationen bedienen. In jedem Fall muss ein dauerhafter Arbeitsplatz für Menschen gebaut werden. Die Anforderungen hieran sind erheblich höher als für einen Wartungszugang (Belüftung, Schallschutz, Arbeitswege, Fluchtwege, ...). Neben der normalen Förderstrecke wird eine Ausschleusung, Wartepositionen, der Arbeitsplatz und eine Einschleusung benötigt.

Der vorliegenden Erfindung liegt daher die Aufgabe zugrunde, ohne die Nachteile des Stands der Technik die Ausleserate von Identifikatoren von Stückgütern zu verbessern. Diese Aufgabe wird durch die in den unabhängigen Ansprüchen beschriebenen Lösungen gelöst.

Die erfindungsgemäße Lösung betrifft ein Verfahren zum Auffinden und Manipulieren eines an einem Stückgut befestigten Identifikators mit einer eindeutigen maschinenlesbaren Identität, insbesondere eines an einem Gepäckstück befestigten Gepäckanhängers, welche dem Stückgut eine Sortierinformation zuordnet mit den Verfahrensschritten:
a) Transportieren des Stückgutes hin zu einer Lesevorrichtung.
b) Die Lesevorrichtung versucht den Identifikator des Stückguts aufzufinden und auszulesen.
c) Bei einem nicht erfolgreichen Auffinden des Identifikators mechanisches Manipulieren, insbesondere Bewegen, des Stückguts mit einer Manipulationsvorrichtung und/oder anderweitig und erneute Durchführung des Verfahrens ab Verfahrensschritt b) .
d) Bei einem erfolgreichen Auffinden des Identifikators und einem nicht erfolgreichen Auslesen des Identifikators mechanisches Manipulieren, insbesondere Entfalten und/oder Hervorziehen und/oder Wenden, des Identifikators mit der Manipulationsvorrichtung und erneute Durchführung des Verfahrens ab Verfahrensschritt b).
e) Bei einem erfolgreichen Auffinden und Auslesen des Identifikators, weitere Behandlung des Stückguts gemäß der durch den ausgelesenen Identifikator ermittelten Sortierinformation.

Die erfindungsgemäße Vorrichtung betrifft ein System zum Auffinden und Manipulieren eines an einem Stückgut befestigten Identifikators mit einer eindeutigen maschinenlesbaren Identität, insbesondere eines an einem Gepäckstück befestigten Gepäckanhängers, welche dem Stückgut eine Sortierinformation zuordnet, umfassend eine Lesevorrichtung und eine Manipulationsvorrichtung. Die Lesevorrichtung ist ausgestaltet, den Identifikator des Stückguts aufzufinden und auszulesen. Die Manipulationsvorrichtung ist ausgestaltet, den Identifikator mechanisch zu manipulieren, insbesondere zu entfalten und/oder zu wenden und/oder hervorzuziehen, um ein erfolgreiches Auslesen zu ermöglichen.

Vorteilhafte Ausgestaltungen der Erfindung ergeben sich aus den Unteransprüchen.

Manipulieren ist jegliche Beeinflussung der Position, Lage und/oder Form des Identifikators, beispielsweise durch Greifen, Hervorziehen, Drehen, Entfalten, Entknittern o.ä.. Die Bezeichnung Identifikator umfasst jede Markierung mit einer eindeutigen maschinenlesbaren Identität. Im Flughafenbereich sind dies heutzutage flexible Gepäckaufkleber, die Erfindung ist jedoch weder auf Gepäckaufkleber noch auf Gepäckstücke als Stückgut beschränkt, sondern kann auch für eine Vielzahl anderer Stückgüter herangezogen werden, beispielsweise Postsendungen und allgemeine Logistikgüter. Eine nur beispielsartig aufgeführte Möglichkeit, den Identifikator des Stückguts aufzufinden und zu identifizieren ist durch Aufnahme eines oder mehrerer Abbilder des Stückguts und anhand dieser Aufnahme(n) wird der Identifikator ausfindig gemacht und ausgelesen.

Die erfindungsgemäße Lösung kann durch verschiedene, jeweils für sich vorteilhafte und, sofern nicht anders ausgeführt, beliebig miteinander kombinierbarer Ausgestaltungen weiter verbessert werden. Auf diese Ausgestaltungsformen und die mit ihnen verbundenen Vorteile wird im Folgenden eingegangen.

Gemäß einer Ausführungsform kann ein Bewegen der Manipulationsvorrichtung hin zum Identifikator erfolgen, wobei die Manipulationsvorrichtung den Identifikator durch Einziehen oder anderweitig entfaltet oder hervorzieht. Diesen Einziehen kann beispielsweise in der Art eines Geldscheine akzeptierenden Automats erfolgen, oder mit einem Gebläse, welches den Identifikator einsaugt, um ihn zu glätten/entknittern. Hierzu kann die die Manipulationsvorrichtung eine Saugvorrichtung umfassen, die staubsaugerartig ausgestaltet sein kann, um den Identifikator einzuziehen.

Gemäß einer Ausführungsform kann ein Bewegen der Manipulationsvorrichtung, natürlich samt allfälliger Detektionsvorrichtung, falls diese den Manipulationsbereich der Manipulationsvorrichtung nicht im Blickfeld hat, und/oder der Lesevorrichtung entlang eines Abschnitt der Förderstrecke des Stückguts während der Durchführung des Verfahrens erfolgen. Dies beispielsweise, indem die Manipulationsvorrichtung bzw. die Lesevorrichtung am Rand oder neben der Förderstrecke auf Führungsschienen oder auf eigenen Transportwegen bewegbar ausgestaltet sind. So kann das Verfahren durchgeführt werden ohne dass notwendigerweise ein Ausschleusen, welches Ausschleuswege und Platz für eine Kodierstation, erforderlich ist. Nur wenn der Identifikator dennoch nicht erfolgreich ausgelesen werden kann, werden diese benötigt, allerdings müssen sie nur für eine geringere Anzahl an Stückgütern dimensioniert werden.

Gemäß einer Ausführungsform kann die Manipulationsvorrichtung den Identifikator und/oder das Stückgut durch Greifbewegungen manipulieren. Hierzu kann die Manipulationsvorrichtung zum Greifen ausgestaltet sein, insbesondere indem die Manipulationsvorrichtung mindestens zwei Roboterfinger an einer oder zwei Roboterarmen bzw. Roboterhänden aufweist. Somit ist die Manipulationsvorrichtung zum Greifen des Identifikators und/oder des Stückguts ausgestaltet sein.

Gemäß einer Ausführungsform kann eine Detektionsvorrichtung einen den Identifikator und/oder das Stückgut manipulierenden Ausschnitt der Manipulationsvorrichtung detektieren, insbesondere indem die Detektionsvorrichtung einer Bewegung der Manipulationsvorrichtung folgt. Die Detektionsvorrichtung kann somit herangezogen werden, um sämtliche Manipulationsversuche des Identifikators und/oder des Stückguts zu überwachen.

Gemäß einer Ausführungsform kann das System eine Fernsteuervorrichtung zum drahtlosen Fernsteuern der Manipulationsvorrichtung umfassen. Die Fernsteuervorrichtung ermöglicht ein drahtloses Fernsteuern des Manipulierens durch die Manipulationsvorrichtung. Die Fernsteuervorrichtung kann joystickartig, als manuell zu bewegender Zwilling der Manipulationsvorrichtung oder anderweitig ausgestaltet sein.

Gemäß einer Ausführungsform kann das Verfahren mit einer Selbstlern-Funktionalität, insbesondere einer iterativen Selbstlern-Funktionalität, die Ansteuerung der Manipulationsvorrichtung bestimmen, um Schnelligkeit und Erfolgsquote des erfolgreichen Auffinden und Auslesens des Identifikators zu verbessern. Die genaue Ausgestaltung der Selbstlern-Funktionalität kann nach gängigen Methoden gewählt werden, hervorzuheben ist hier beispielsweise das Reinforcement Learning. Gemäß einer Ausführungsform kann die Manipulationsvorrichtung oder eine andere vom System umfasste Vorrichtung ausgestaltet sein, das Stückgut mechanisch zu manipulieren, insbesondere zu bewegen, noch insbesonderer zu drehen, um den Identifikator aufzufinden und so für die Lesevorrichtung auslesbar zu machen. Dies kann auch durchgeführt werden von einer anderweitig von dem System umfassten Vorrichtung, insbesondere dann, wenn die Manipulationsvorrichtung nicht stabil genug für das mechanische Manipulieren der Manipulationsvorrichtung ausgestaltet ist.

Das Verfahren weist, soweit übertragbar, die gleichen Vorteile auf, welche bezüglich des vorgestellten Verfahrens aufgeführt sind. Die bisher gegebene Beschreibung vorteilhafter Ausgestaltungen der Erfindung enthält zahlreiche Merkmale, die in den einzelnen Unteransprüchen teilweise zu mehreren zusammengefasst wiedergegeben sind. Diese Merkmale können jedoch zweckmäßigerweise auch einzeln betrachtet und zu sinnvollen weiteren Kombinationen zusammengefasst werden. Insbesondere sind diese Merkmale jeweils einzeln und in beliebiger geeigneter Kombination mit dem erfindungsgemäßen Verfahren, der erfindungsgemäßen Funktionseinheit und der erfindungsgemäßen Sortieranlage kombinierbar. So sind Verfahrensmerkmale auch als Eigenschaft der entsprechenden Vorrichtungseinheit gegenständlich formuliert zu sehen und umgekehrt.

Ausführungsformen der Erfindung werden nachfolgend anhand der Figuren beispielsweise näher erläutert. Dabei zeigen:
- Figur 1: eine stationäre Kodierstation in einer Gepäckförderanlage;
- Figur 2: eine Kodierstation mit zwei Manipulationsvorrichtungen.

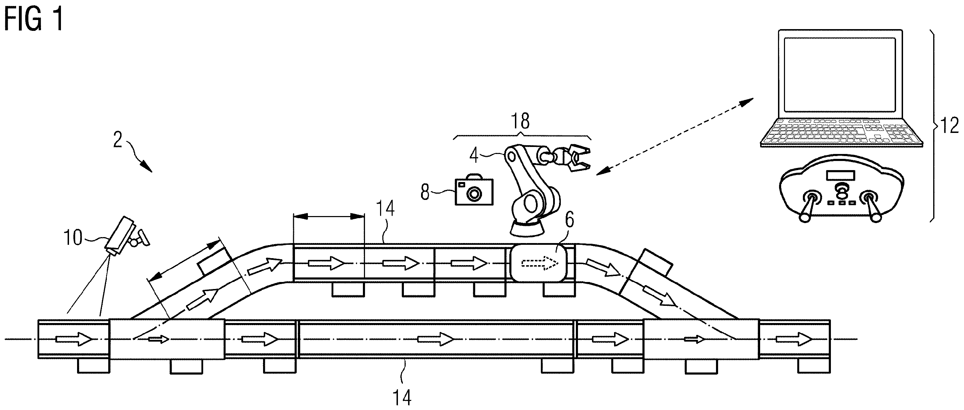

Figur 1 zeigt einen als Manipulationsvorrichtung 4agierenden Roboter 4 an einer Kodierstation 18 gemäß einer Ausführungsform der Erfindung. Die Gepäckstücke werden entlang der Förderstrecke 14 transportiert und an der vor einer zur Kodierstation 18 führenden Abzweigung von der Lesevorrichtung 10 erfasst. An der Lesevorrichtung 10 (typischerweise aber nicht abschließend: ein Lesetor oder ein Array von Kameras) wird versucht, den Gepäckanhänger des Gepäckstücks 6 zu finden und auszulesen. Bei erfolgreicher Auffinden und erfolgreichen Auffinden des Gepäckanhängers wird das Gepäckstück 6 weiter entlang der Hauptförderstrecke 14 transportiert und gemäß seiner zugeordneten Sortierinformation behandelt. Bei nicht erfolgreichen Auffinden und/oder nicht erfolgreichem Auslesen des Gepäckanhängers wird das Gepäckstück 6 auf einer weiteren Förderstrecke 14' hin zur Kodierstation 18 transportiert. An der Kodierstation 18 wird unter Zuhilfenahme einer Detektionsvorrichtung 8 (Kamera, Array von Kameras o.ä.) zunächst versucht, den Gepäckanhänger zu lokalisieren. Wenn dies nicht erfolgreich ist, wird das Gepäckstück 6 repositioniert (gedreht, angehoben, ...) und anschließend ein erneuter Lokalisationsversuch mit Hilfe der Detektionsvorrichtung 8 versucht.

Die Detektionsvorrichtung 8 ist eine Lage, eine Klassifikation durchzuführen: handelt es sich um ein Nichtfinden des Gepäckanhängers (nicht erfolgreiche Lokalisation), um ein nicht erfolgreiches Auslesen und aus welchen Gründen (unlesbar, mindestens partiell verdeckt, ...) oder wurden zwei oder mehr Gepäckanhänger lokalisiert bei nur einem detektierten Gepäckstück 6 (welcher Gepäckanhänger ist gültig, folgen zwei Gepäckstücke 6, 6' zu nahe aufeinander und müssen getrennt ausgelesen werden, ...).

Bei erfolgreicher Lokalisation wird ein Ausleseversuch gestartet. Das Repositionieren erfolgt mit der Manipulationsvorrichtung 4 oder anderweitig, beispielsweise kann auch die Förderstrecke 14' eine Drehung des Gepäckstücks 6 bewirken, beispielsweise durch Rotation eines Abschnitts der Förderstrecke 14' selber. Wenn der Ausleseversuch nicht erfolgreich war, wird der Gepäckanhänger mit der Manipulationsvorrichtung 4 (Roboter 4 o.ä.) manipuliert, um ein Auslesen zu ermöglichen. Typische Manipulationen sind das Greifen und anschließende Hervorziehen eines nur partiell sichtbaren Gepäckanhängers (z.B. da verdeckt von einem Kofferhenkel o.ä.), das Entknittern/Glattziehen eines unlesbaren Gepäckanhängers, Drehen, ....

Wenn zwei oder mehr Gepäckanhänger detektiert wurden, wird geprüft welcher dieser Gepäckanhänger gültig ist. Allenfalls kann es sich auch um zwei sehr dicht aufeinander folgende Gepäckstücke 6, 6' handeln, die von der Förderstrecke 14' (unterschiedliche Geschwindigkeiten) oder Manipulationsvorrichtung 4 getrennt werden und anschließend separat behandelt werden.

Hierzu weist die Manipulationsvorrichtung 4 gemäß einer Ausführungsform Greifvorrichtungen auf, besonders eignen sich hierfür mindestens zwei Roboterfinger an einer oder zwei Roboterarmen bzw. -händen. Gemäß einer weiteren Ausführungsform weist die Manipulationsvorrichtung 4 eine Einziehvorrichtung und/oder ein Gebläse auf, um den Gepäckanhänger durch Einziehen zu glätten und ihn so lesbar zu machen.

Um das Manipulieren zu beobachten und zu steuern, kann gemäß einer Ausführungsform die Detektionsvorrichtung 8 den Bewegungen des Roboters 4 stets folgen, beispielsweise indem sie direkt am Roboter 4 selber montiert ist oder durch eine Anordnung oberhalb dem Roboter 4, d.h. in der Vogelperspektive - stationär oder sich mitbewegend.

Nach einem erfolgreichen Auslesen des gültigen Gepäckanhängers wird das Gepäckstück 6 von der weiteren Förderstrecke 14' wieder der Hauptförderstrecke 14 zugeführt und anschließend gemäß der zugehörigen Sortierinformation behandelt.

Gemäß einer Ausführungsform werden die Manipulationsbewegungen des Roboters 4 vollständig automatisiert gesteuert. Vorzugsweise wendet das Verfahren eine - vorzugsweise, aber nicht notwendigerweise iterative - Selbstlernfunktionalität an, um Erfolgsquote und Geschwindigkeit des Auffindens, Manipulierens und Auslesens mit zunehmender Anzahl bereits durch den Roboter 4 manipulierter Gepäckstücke 6 immer weiter zu verbessern.

Gemäß einer Ausführungsform wird bei Bedarf (kein Erfolgreiches Auffinden und/oder Auslesen des Gepäckanhängers) ferngesteuert eingegriffen um in Fällen, bei denen die automatisierte Verfahrensdurchführung versagt, dennoch ein erfolgreiches Auslesen des Gepäckanhängers zu ermöglichen ohne dass ein Mensch physisch bei dem Gepäckstück 6 sein muss. Hierzu umfasst das System eine Fernsteuervorrichtung 12, die auf unterschiedliche Weise ausgestaltet sein kann, beispielsweise als einfache Bedienfunktionalität am Computer, in der Art einer Spielkonsole oder als manuell zu bewegender Zwilling, u.U. handschuhartig, der Greifwerkzeuge des Roboters 4. Der Bediener kann hierbei die Roboter 4 von mehr als eine Kodierstation 18 steuern.

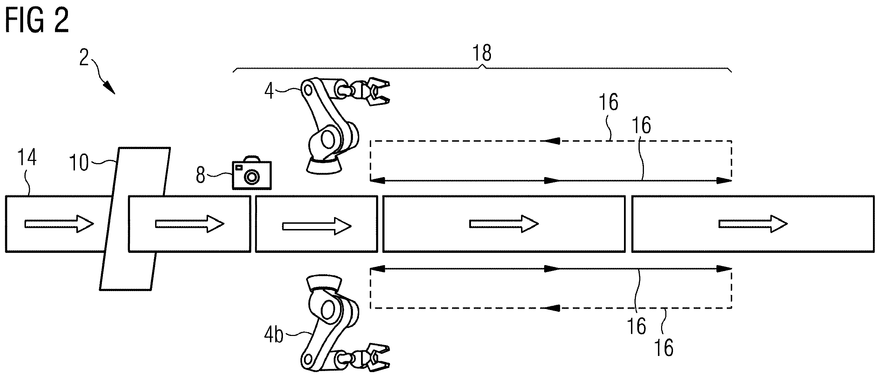

Während die in Figur 1 gezeigte Ausführungsform eine stationäre Kodierstation 18 zeigt, zeigt die in Figur 2 gezeigte Ausführungsform eine sich mitbewegende Kodierstation 18 mit sich entlang des Transportweges 14 des Gepäckstücks mitbewegenden Manipuliervorrichtungen 4, die in der Art des in Figur 1 gezeigten Roboters 4 oder anderweitig ausgestaltet ist. Zunächst fährt das Gepäckstück 4 durch die Lesevorrichtung 10. Wenn diese den Gepäckanhänger nicht auffinden oder zwar auffinden, aber nicht auslesen konnte, wird die Manipuliervorrichtung 4 das Gepäckstück manipulieren (drehen, wegklappen von potenziell den Gepäckanhänger verdeckenden Koffergriffen o.ä.) um den Gepäckanhänger aufzufinden, gefolgt von einem Ausleseversuch.

Der Ausleseversuch wird durchgeführt von einer separaten oder von der Manipuliervorrichtung 4 umfassten Detektionsvorrichtung 8, wobei der Ausleseversuch selbstverständlich auch durchgeführt werden kann anhand eines Abbilds des Gepäckstücks 6. Wenn der Ausleseversuch erfolgreich war, wird das Gepäckstück 6 gemäß der Sortierinformation behandelt, andernfalls erfolgt noch wie oben beschrieben eine Manipulation des Gepäckanhängers während des weiteren Transports des Gepäckstücks 6 auf der Förderstrecke 14. Nur wenn kein erfolgreiches Auslesen durchgeführt werden kann, wird das Gepäckstück 6 im weiteren Verfahren ausgeschleust und manuell behandelt. Der Roboter 4 kann entweder hin- und herfahren (durchgezogener Fahrweg 16) oder zirkular (durchgezogener und gestrichelter Fahrweg 16) sein, wobei letzteres den Vorteil hat, dass mehrere Roboter 4 gleichzeitig eingesetzt werden können. Bei geringer Auslastung ist es selbstverständlich möglich, die Manipulation bei angehaltener Förderstrecke 14 durchzuführen.

Bei genug Platz entlang der Förderstrecke 14 ist es gemäß einer Ausführungsform möglich, zur Kapazitätserhöhung mehrere Roboter 4, allenfalls jeweils samt Detektionsvorrichtung 8, beidseitig der Förderstrecke 14 anzuordnen so wie in Figur 2 gezeigt.

Natürlich ist es gemäß einer Ausführungsform auch möglich, dass die Manipulationsvorrichtung 4 über zwei oder mehr Greifvorrichtung verfügt und das Gepäckstück 6 während des Verfahrens zum Auffinden und/oder Manipulieren des Gepäckanhängers mit dem Ziel des erfolgreichen Auslesens des Gepäckanhängers einfach angehoben wird und nach Abschluss wieder auf die Förderstrecke 14 abgesetzt wird. Hierbei kann, muss die Manipulationsvorrichtung 4 nicht entlang der Förderstrecke 14 bewegt werden.

Anstelle einer Person werden die zum Auffinden und Auslesen des Identifikators erforderlichen Schritte durch eine Maschine 4 durchgeführt. Das Gepäckstück 6 an der Kodierstation 18 wird von einer Kamera 8 erfasst. Der Fall wird klassifiziert (z.B. Gepäckstück 6 liegt auf Tag in Wanne oder zwei Gepäckstücke 6 reisen zusammen). Kombinationen von Fällen sind möglich.

Im Einzelnen werden die Fälle gemäß eigenen Ausführungsformen wie folgt behandelt:
a) Doppelte Gepäckstücke werden durch Förderer 14 mit unterschiedlichen Geschwindigkeiten oder von der Manipulationsvorrichtung 4 getrennt.
b) Zerknüllte Gepäckanhänger werden durch ein Gebläse (und oder Saugeinrichtung) als Werkzeug der Manipulationsvorrichtung 4 entknüllt. Ist dies nicht ausreichend wird ein kleiner Greifer an einer Roboterspitze der Manipulationsvorrichtung 4 eingesetzt.
c) Ist der Gepäckanhänger aus anderen Gründen vom Gepäckstück 6 erborgen, wird das Gepäckstück 6 mit einem Greifer als Roboterhand so lange gedreht werden, bis der Gepäckanhänger sichtbar ist. Dies gilt auch für den Fall eines Gepäckstückes 6 in einem Hilfsbehälter 6.
d) Ist kein Gepäckanhänger vorhanden wird das Gepäckstück 6 aus der Anlage gefahren. Wird dieses klassifiziert, kann diese ohne das Eingreifen einer Person geschehen. Entsprechend werden auch leere Hilfsbehälter 6 erkannt und behandelt.
e) Sind mehrere Tags vorhanden kann ein Kamerasystem 8, 10 kleinere Stubs von großen Gepäckanhängern unterscheiden und entsprechend priorisieren.
f) Muss ein neuer Gepäckanhänger angebracht werden, kann mit bekannten Methoden ein Aufkleber auf das Gepäckstück 6 aufgebracht werden.
g) Müssen ungültige Gepäckanhänger /Aufkleber entfernt werden, können diese durch Aufkleber überklebt werden.

Die Fälle können in kombinierter Folge eintreten. Vorgeschlagen wird gemäß einer Ausführungsform eine Durchführung in der Reihenfolge a), d), e), b), c), f).

In einer Ausführungsform soll der Roboter 4 ferngesteuert von einer Person bedient werden. Für den Niedriglastfall soll diese Person mehrerer Kodierstationen 18 steuern können. Ebenso kann diese Steuerung außerhalb des Flughafens stattfinden. Die Arbeit mehrerer Flughäfen kann kombiniert werden.

Gemäß einer Ausführungsform wird der Prozess durch geeignete Software komplett automatisiert. Die Arbeit die Manipulationsvorrichtung 4 fernsteuernden Person wird durch eine Steuerungssoftware ersetzt.

In einer weiteren Ausführung wird auf das Ausschleusen der Gepäckstücke 6 verzichtet. Der Roboter 4 fährt parallel zur Hauptlinie 14 mit. Dies kann durch einen 7-Achsen Roboter oder einer geeigneten Führung passieren (z.B. Brückenkran). Der Roboter 4 wartet flussaufwärts. Kommt ein Gepäckstück 6, welches eine Kodierung benötigt, vorbei, fährt der Roboter 4 mit diesem mit und führt die beschriebenen Schritte durch. Am Ende der Kodierung fährt der Roboter 4 wieder zurück zur Warteposition. Kommt während der Kodieraufgabe ein weiteres Gepäckstück 6 an die Warteposition wird die Linie angehalten bis der Roboter 4 dieses Gepäckstück übernehmen kann. Die Leistung kann durch den Einsatz von zwei (z.B. von jeder Seite einer) oder mehr Robotern 4 gesteigert werden. Auch dieser Fall kann sowohl ferngesteuert als auch vollautomatisiert durchgeführt werden.

Die Anzahl der Personen mit einem Arbeitsplatz in der Anlage 2 wird reduziert. Aufwendige Arbeits- und Fluchtwege müssen nicht gebaut werden. Es sind keine Einhausungen für Klimatisierung und Lärmschutz erforderlich. In Niedriglastphasen kann eine Person mehr Kodierstationen 18 bedienen da sie nicht physisch anwesend sein muss. In der automatisierten Variante kann sogar weitgehen auf Personal mit einfachen Tätigkeiten verzichtet werden.

Fährt ein Roboter 4 mit (Figur 2) entfällt die Ausschleusung, die parallele Fördertechnik und die Einschleusung (Figur 1). Weniger Förderer 14 werden gebraucht und die Anlage 2 ist somit kompakter.

### Bezugszeichenliste

- 2: Fördersystem
- 4: Manipulationsvorrichtung, Roboter
- 6: Stückgut, Gepäckstück, Förderwanne mit Stückgut
- 8: Detektionsvorrichtung
- 10: Lesevorrichtung
- 12: Fernsteuervorrichtung
- 14: Transportweg, Förderstrecke
- 16: Fahrweg Roboter
- 18: Kodierstation

## Patentansprüche

1. Verfahren zum Auffinden und Manipulieren eines an einem Stückgut (6) befestigten Identifikators mit einer eindeutigen maschinenlesbaren Identität, insbesondere eines an einem Gepäckstück befestigten Gepäckanhängers, welche dem Stückgut (6) eine Sortierinformation zuordnet;
**gekennzeichnet durch** die Verfahrensschritte
a) Transportieren des Stückgutes (6) hin zu einer Lesevorrichtung (10);
b) die Lesevorrichtung (10) versucht den Identifikator des Stückguts (6) aufzufinden und auszulesen;
c) bei einem nicht erfolgreichen Auffinden des Identifikators mechanisches Manipulieren, insbesondere Bewegen, des Stückguts (6) mit einer Manipulationsvorrichtung (4) und/oder anderweitig und erneute Durchführung des Verfahrens ab Verfahrensschritt b);
d) bei einem erfolgreichen Auffinden des Identifikators und einem nicht erfolgreichen Auslesen des Identifikators mechanisches Manipulieren, insbesondere Entfalten und/oder Hervorziehen und/oder Wenden, des Identifikators mit der Manipulationsvorrichtung (4) und erneute Durchführung des Verfahrens ab Verfahrensschritt b);
e) bei einem erfolgreichen Auffinden und Auslesen des Identifikators, weitere Behandlung des Stückguts (6) gemäß der durch den ausgelesenen Identifikator ermittelten Sortierinformation.

2. Verfahren nach Anspruch 1, **gekennzeichnet durch** Bewegen der Manipulationsvorrichtung (4) hin zum Identifikator, wobei die Manipulationsvorrichtung (4) den Identifikator durch Einziehen oder anderweitig entfaltet oder hervorzieht.

3. Verfahren nach einem der Ansprüche 1 bis 2, **gekennzeichnet durch**
Bewegen der Manipulationsvorrichtung (4) und/oder der Lesevorrichtung (10) entlang eines Abschnitt der Förderstrecke (14) des Stückguts (6) während der Durchführung des Verfahrens gemäß einem der Ansprüche 1 bis 3.

4. Verfahren nach einem der Ansprüche 1 bis 3, **dadurch gekennzeichnet, dass**
die Manipulationsvorrichtung (4) den Identifikator und/oder das Stückgut (6) durch Greifbewegungen manipuliert.

5. Verfahren nach einem der Ansprüche 1 bis 5, **dadurch gekennzeichnet, dass**
eine Detektionsvorrichtung (8) einen den Identifikator und/oder das Stückgut (6) manipulierenden Ausschnitt der Manipulationsvorrichtung (4) detektiert, insbesondere indem die Detektionsvorrichtung (8) einer Bewegung der Manipulationsvorrichtung (4) folgt.

6. Verfahren nach einem der Ansprüche 1 bis 6, **gekennzeichnet durch**
drahtloses Fernsteuern der Manipulationsvorrichtung (4).

7. Verfahren nach einem der Ansprüche 1 bis 7, **dadurch gekennzeichnet, dass**
das Verfahren mit einer Selbstlern-Funktionalität, insbesondere eine iterative Selbstlern-Funktionalität, die Ansteuerung der Manipulationsvorrichtung (4) bestimmt, um Schnelligkeit und Erfolgsquote des erfolgreichen Auffinden und Auslesens des Identifikators zu verbessern.

8. System zum Auffinden und Manipulieren eines an einem Stückgut (6) befestigten Identifikators mit einer eindeutigen maschinenlesbaren Identität, insbesondere eines an einem Gepäckstück befestigten Gepäckanhängers, welche dem Stückgut (6) eine Sortierinformation zuordnet, umfassend eine Lesevorrichtung (10) und eine Manipulationsvorrichtung (4), wobei
- die Lesevorrichtung (10) ausgestaltet ist, den Identifikator des Stückguts (6) aufzufinden und auszulesen;
- die Manipulationsvorrichtung (4) ausgestaltet ist, den Identifikator mechanisch zu manipulieren, insbesondere zu entfalten, zu wenden und hervorzuziehen, um ein erfolgreiches Auslesen zu ermöglichen.

9. System nach Anspruch 9, **dadurch gekennzeichnet, dass** die Manipulationsvorrichtung (4) oder eine andere vom System umfasste Vorrichtung ausgestaltet ist, das Stückgut (6) mechanisch zu manipulieren, insbesondere zu bewegen, um den Identifikator aufzufinden.

10. System nach einem der Ansprüche 9 bis 10, **dadurch gekennzeichnet, dass**
die Manipulationsvorrichtung (4) ausgestaltet ist, hin zum Identifikator bewegt zu werden und den Identifikator einzuziehen oder anderweitig zu entfalten oder hervorzuziehen.

11. System nach Anspruch 10, **dadurch gekennzeichnet, dass** die Manipulationsvorrichtung (4) eine Saugvorrichtung umfasst, um den Identifikator einzuziehen.

12. System nach einem der Ansprüche 9 bis 11, **dadurch gekennzeichnet, dass**
die Manipulationsvorrichtung (4) und/oder die Lesevorrichtung (10) ausgestaltet sind, entlang eines Abschnitt einer Förderstrecke (14) des Stückguts (6) bewegt zu werden.

13. System nach einem der Ansprüche 9 bis 12, **dadurch gekennzeichnet, dass**
die Manipulationsvorrichtung (4) zum Greifen ausgestaltet ist, insbesondere indem die Manipulationsvorrichtung (4) mindestens zwei Roboterfinger an einer oder zwei Roboterarmen aufweist.

14. System nach einem der Ansprüche 9 bis 13, zudem umfassend eine Detektionsvorrichtung (8), die ausgestaltet ist, einen den Identifikator und/oder das Stückgut (6) manipulierenden Ausschnitt der Manipulationsvorrichtung (4) zu detektieren, insbesondere indem die Detektionsvorrichtung (8) ausgestaltet ist, einer Bewegung der Manipulationsvorrichtung (4) zu folgen.

15. System nach einem der Ansprüche 9 bis 14, zudem umfassend eine Fernsteuervorrichtung (12) zum drahtlosen Fernsteuern der Manipulationsvorrichtung (4).
